# FASCICULE DE BREVET EUROPEEN

(11) **EP 0 713 036 B1**
(45) Date de publication et mention de la délivrance du brevet: **09.01.2002**
(21) Numéro de dépôt: 95402505.2
(22) Date de dépôt: 09.11.1995
(51) Int. Cl.: F16K 1/44, F02M 25/08

(54) **Clapet d'électrovanne et circuit de recyclage de vapeurs d'essence de moteur à combustion interne**
Elektromagnetisches Ventil und Brennstoffdampfrückführungskreis einer Brennkraftmaschine
Electromagnetic valve and recirculation circuit for fuel vapour of an internal combustion engine

(30) Priorité: 17.11.1994 FR 9413758
(43) Date de publication de la demande: 22.05.1996
(73) Titulaire: SAGEM SA, 75783 Paris Cédex 16 (FR)
(72) Inventeur: Neron, Gilles, F-63670 Le Cendre (FR); Vaz de Azevedo, José, F-63500 Issoire (FR)
(74) Mandataire: Geismar, Thierry

(56) Documents cités:
- EP-A- 0 005 395
- WO-A-92/08918
- FR-A- 2 437 554
- US-A- 4 944 276

## Description

La présente invention concerne un clapet d'électrovanne et un circuit de recyclage de vapeurs d'essence de moteur à combustion interne. Plus particulièrement, elle concerne un clapet d'électrovanne comportant un siège et une bobine d'électroaimant, ledit clapet comprenant l'extrémité libre d'un noyau mobile à l'intérieur du moyeu de ladite bobine.

Dans les clapets de ce type, la bobine de l'électroaimant est généralement alimentée en courant haché de période constante et de rapport cyclique variable, le rapport cyclique étant défini comme le rapport de la durée pendant laquelle, au cours d'une période, la tension est à un niveau haut, à la durée de la période. L'extrémité libre du noyau mobile forme un clapet dont la position varie en fonction de la dépression en aval de l'électrovanne et du rapport cyclique d'ouverture, entre une position de fermeture où cette extrémité libre est en appui sur le siège et ferme par conséquent l'électrovanne, et une position le plus à l'écart du siège où le débit est maximum. Bien entendu, le débit est fonction à la fois de l'écartement entre le clapet et le siège ainsi que de la dépression régnant entre l'intérieur et l'extérieur de l'électrovanne.

Un problème qui se pose est celui du débit pour de très faibles dépressions. En effet, dans les électrovannes connues, le débit à faible dépression est lui-même très faible, instable et non reproductible. Or il arrive que l'on souhaite de forts débits bien que la dépression soit faible.

On connaît par le document FR-A-2 437 554 une électrovanne à gaz selon le préambule de la revendication 1. Cette électrovanne comprend un organe intermédiaire formant un double clapet. L'ensemble formé par l'organe obturateur du clapet petit débit et l'organe intermédiaire est pressé en direction du siège du clapet grand débit par des moyens élastiques agissant contre l'action de l'électroaimant de l'électrovanne. Aucun moyen spécifique n'est toutefois prévu pour la commande de l'organe intermédiaire.

Le problème évoqué ci-dessus se rencontre en particulier dans les circuits de recyclage des vapeurs d'essence dans les moteurs à combustion interne. De tels circuits visent à recycler à l'entrée du moteur les vapeurs d'essence contenues dans le réservoir. La dépression est ici fournie par l'alimentation du moteur. Elle est donc faible à faible charge, de sorte que le recyclage est peu efficace.

La présente invention vise à pallier ces inconvénients. Plus particulièrement, l'invention vise à fournir un clapet d'électrovanne qui possède un débit important pour de faibles différences de pression et qui, pour des différences de pression plus importantes, possède un débit plus faible et une caractéristique débit/pression d'électrovanne classique.

A cet effet, l'invention a tout d'abord pour objet un clapet d'électrovanne selon la revendication 1.

On verra ci-après qu'un tel agencement permet, tant que la dépression en aval du clapet est faible, l'ouverture du premier siège et donc un fort débit, puis, lorsque la dépression s'accroît, la fermeture du premier siège au profit du deuxième et donc un débit moins important et une caractéristique de fonctionnement classique.

Dans un mode de réalisation particulier de l'invention, ledit organe intermédiaire est en forme de coupelle, ledit deuxième siège étant formé dans le fond de ladite coupelle, ledit fond étant, du côté de sa face extérieure, en vis-à-vis dudit premier siège, et ladite extrémité libre du noyau étant engagée à l'intérieur de ladite coupelle.

Egalement dans un mode de réalisation particulier, lesdits moyens élastiques comprennent un ressort hélicoïdal en appui, à une de ses extrémités sur une surface d'appui du boîtier, et à son autre extrémité sur un épaulement dudit organe intermédiaire.

Ladite extrémité libre du noyau mobile et ledit deuxième siège peuvent être coniques.

Des deuxièmes moyens élastiques peuvent en outre être agencés pour presser ledit noyau mobile en direction dudit deuxième siège.

La présente invention a également pour objet un circuit de recyclage de vapeurs d'essence de moteur à combustion interne, caractérisé par le fait qu'il comprend une électrovanne possédant un clapet tel que décrit ci-dessus.

On décrira maintenant, à titre d'exemple non limitatif, un mode de réalisation particulier de l'invention, en référence aux dessins schématiques annexés dans lesquels:
- la figure 1 est vue en coupe axiale d'une électrovanne comportant un clapet selon l'invention;
- la figure 2 est une demi-vue à plus grande échelle du détail l de la figure 1;
- la figure 3 illustre la caractéristique de fonctionnement de la vanne de la figure 1; et
- la figure 4 représente schématiquement un circuit de recyclage de vapeurs d'essence comportant le clapet de la figure 1.

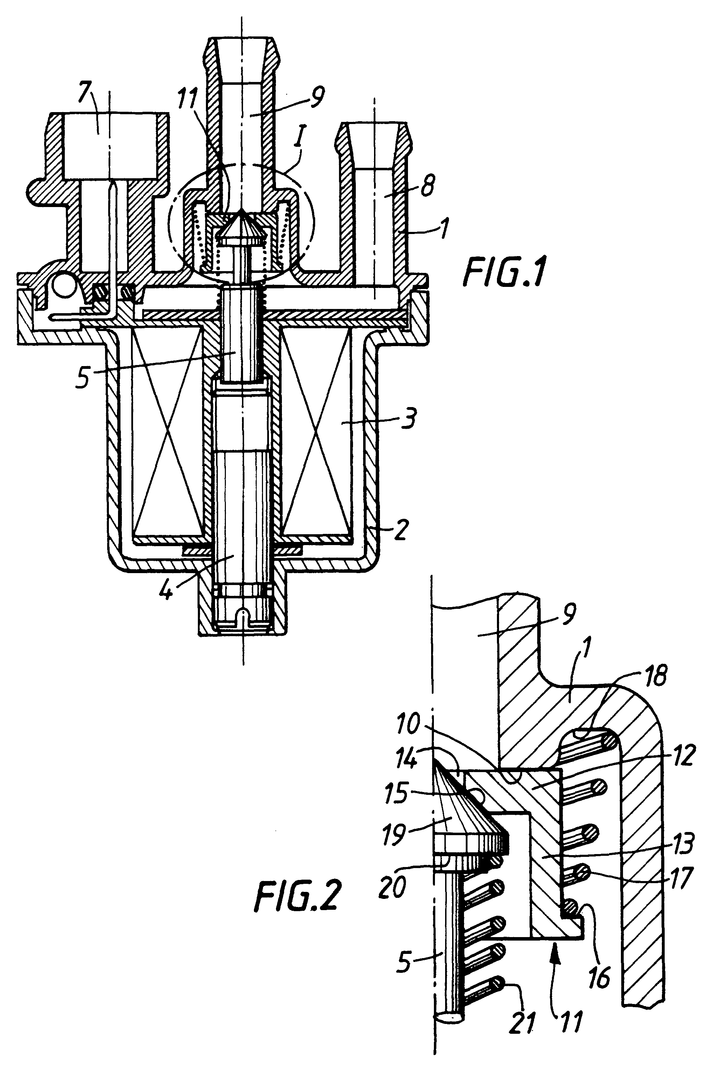

L'électrovanne des figures 1 et 2 comporte un corps 1 et un couvercle 2 délimitant un espace dans lequel est logée une bobine d'électroaimant 3. A l'intérieur du moyeu de la bobine est disposé un noyau magnétique fixe 4 et un noyau mobile 5 distants axialement d'une longueur variable définissant l'entrefer de la bobine. Plus l'entrefer est faible, et plus est forte pour un rapport cyclique d'alimentation de la bobine donné, la force d'attraction du noyau mobile 5 par le noyau fixe 4.

La bobine 3 est alimentée en courant haché à rapport cyclique variable à partir d'un connecteur 7 formé dans le boîtier 1.

Le boîtier 1 forme par ailleurs un conduit d'entrée 8 et un conduit de sortie 9 de fluide pour l'espace intérieur au boîtier. L'extrémité intérieure du conduit 9 délimite un premier siège 10 avec lequel coopère un organe intermédiaire 11.

Cet organe 11 est en forme de coupelle avec un fond 12 et une paroi latérale sensiblement cylindrique 13. La face du fond 12 extérieure à la coupelle est en vis-à-vis du siège 10. Le fond 12 comporte en outre un orifice 14 dont la partie située du côté intérieur de la coupelle est chanfreinée de manière à former un deuxième siège 15, conique, coaxial au premier siège, et dont la section d'ouverture est plus petite que celle du premier siège 10.

Un épaulement 16 de la paroi 13 reçoit une extrémité d'un ressort hélicoïdal (ici tronconique) 17 dont l'autre extrémité est en appui dans une gorge 18 formée dans le boîtier 1. Le ressort 17 repousse donc l'organe 10 à l'écart du siège 10.

Le noyau mobile 5 est formé d'une tige cylindrique dont une extrémité est engagée dans le moyeu de la bobine, et dont l'autre extrémité est en forme de cône 19 et est engagée à l'intérieur de l'organe 13 pour coopérer avec le siège 15 de ce dernier. Un épaulement 20 reçoit une extrémité d'un autre ressort 21 dont l'autre extrémité est en appui sur le boîtier de manière à tendre à appliquer l'extrémité conique du noyau 5 sur le deuxième siège 15.

L'électrovanne qui vient d'être décrite fonctionne de la manière suivante.

A l'arrêt, le clapet est fermé comme représenté aux dessins, la force exercée par le ressort 21 étant supérieure à celle du ressort 17.

Lorsque la tige 5 est sollicitée par l'électroaimant et que la dépression est faible, le cône 19 tend à s'écarter du siège 15 en comprimant le ressort 21. Toutefois, du fait que la dépression est peu importante, le ressort 17 repousse l'organe 11 à l'écart du siège 10, le siège 15 demeurant fermé.

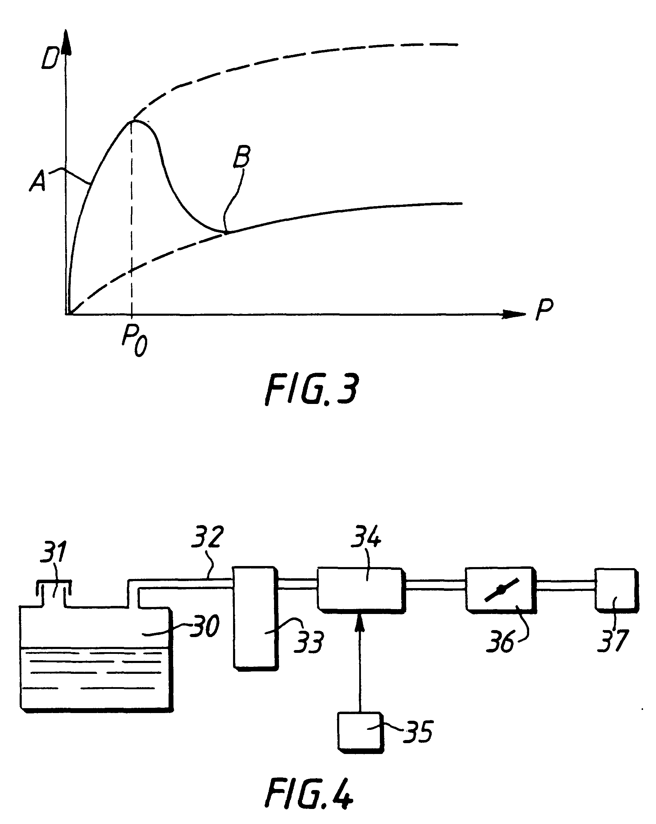

Le siège 10 est donc ouvert, permettant un fort débit. Ce régime est celui de la partie A de la courbe de la figure 3 où le débit augmente très rapidement avec la dépression.

La dépression augmentant et atteignant la valeur P₀, l'organe 11 est "aspiré" vers le siège 10 et ferme ce siège tout en ouvrant le siège 15, de section plus faible. Le point de fonctionnement de la vanne se trouve donc déplacé sur la partie B de la courbe de la figure 3.

La figure 4 montre un réservoir 30 d'essence pour moteur à combustion interne, et notamment pour moteur de véhicule automobile. Le réservoir 30 possède un orifice 31 de remplissage ainsi qu'un autre orifice d'où part une canalisation 32 dont l'autre extrémité est reliée à un piège à vapeurs d'essence 33 à charbon actif. La sortie du piège 33 est reliée à l'entrée d'une électrovanne 34 du type de celle qui vient d'être décrite. Cette électrovanne 34 est commandée par un calculateur 35.

La sortie de l'électrovanne 34 est reliée à l'entrée d'une vanne papillon 36, à laquelle arrivent par ailleurs l'air et l'essence et dont la sortie est reliée de façon connue à la rampe 37 d'alimentation des injecteurs du moteur.

Le calculateur 35 commande, en fonction de la vitesse de rotation du moteur, le rapport cyclique du courant haché alimentant la bobine 7 et commande ainsi le débit de vapeurs d'essence dans l'électrovanne 34. Cette électrovanne est fermée au repos, c'est-à-dire lorsque le moteur est au repos. Elle s'ouvre progressivement par augmentation du rapport cyclique dans la mesure où le calculateur en effectue la demande.

Grâce au clapet selon l'invention, le recyclage des vapeurs d'essence est réalisé convenablement, y compris à fort régime, lorsque la dépression moteur est faible, tout en gardant une bonne précision sur le débit à faible régime.

## Revendications

1. Clapet d'électrovanne comportant un premier siège (10), une bobine (3) d'électroaimant, ledit clapet comprenant l'extrémité libre (19) d'un noyau mobile (5) à l'intérieur du moyeu de ladite bobine, et un organe intermédiaire (11) susceptible de venir en appui sur ledit premier siège et comportant lui-même un deuxième siège (15) en vis-à-vis du premier siège et de section plus faible que celle du premier siège, ladite extrémité libre du noyau mobile étant susceptible de venir en appui sur ledit deuxième siège, **caractérisé par le fait qu'**il comprend en outre des moyens élastiques (17) pour presser ledit organe intermédiaire à l'écart dudit premier siège pour des valeurs de dépression dans l'électrovanne inférieures à une valeur prédéterminée (P₀), ledit organe intermédiaire (11) étant plaqué contre ledit premier siège (10) contre l'action desdits moyens élastiques (17) pour des valeurs de dépression dans l'électrovanne supérieures à ladite valeur prédéterminée.

2. Clapet d'électrovanne selon la revendication 1, dans lequel ledit organe intermédiaire (11) est en forme de coupelle, ledit deuxième siège (15) étant formé dans le fond (12) de ladite coupelle, ledit fond étant, du côté de sa face extérieure, en vis-à-vis dudit premier siège (10), et ladite extrémité libre du noyau étant engagée à l'intérieur de ladite coupelle.

3. Clapet d'électrovanne selon l'une quelconque des revendications 1 et 2, dans lequel lesdits moyens élastiques (17) comprennent un ressort hélicoïdal en appui, à une de ses extrémités sur une surface d'appui (18) du boîtier, et à son autre extrémité sur un épaulement (16) dudit organe intermédiaire (11).

4. Clapet d'électrovanne selon l'une quelconque des revendications 1 à 3, dans lequel ladite extrémité libre (19) du noyau mobile et ledit deuxième siège (15) sont coniques.

5. Clapet d'électrovanne selon l'une quelconque des revendications 1 à 4, dans lequel des deuxièmes moyens élastiques (21) sont agencés pour presser ledit noyau mobile en direction dudit deuxième siège (15).

6. Circuit de recyclage de vapeurs d'essence de moteur à combustion interne, **caractérisé par le fait qu'**il comprend une électrovanne possédant un clapet selon l'une quelconque des revendications 1 à 5.

## Patentansprüche

1. Elektroventilklappe, umfassend einen ersten Sitz (10), eine elektromagnetische Spule (3), wobei besagte Klappe das freie Ende (19) eines mobilen Kerns (5) im Innern des Spulenkerns besagter Spule umfaßt, und ein Zwischenorgan (11), das geeignet ist, auf besagtem ersten Sitz aufzuliegen und selbst einen zweiten Sitz (15) gegenüber dem ersten Sitz und mit geringerem Durchmesser als der des ersten Sitzes zu umfassen, wobei besagtes freies Ende des mobilen Kerns geeignet ist, auf besagtem zweiten Sitz aufzuliegen, **gekennzeichnet durch** die Tatsache, daß sie im übrigen elastische Mittel (17) umfaßt, um besagtes Zwischenorgan im Abstand von besagtem ersten Sitz bei Unterdruckwerten im Elektroventil unterhalb eines vorbestimmten Wertes (P₀) zu drücken, wobei besagtes Zwischenorgan (11) gegen besagten ersten Sitz (10) gegen die Wirkung besagter elastischer Mittel (17) bei Unterdruckwerten im Elektroventil oberhalb des besagten vorbestimmten Wertes gedrückt wird.

2. Elektroventilklappe gemäß Anspruch 1, in dem besagtes Zwischenorgan (11) eine Schalenform aufweist, wobei besagter zweiter Sitz (15) im Boden (12) besagter Schale gebildet ist, wobei besagter Boden auf der Seite seiner Außenfläche gegenüber dem ersten Sitz (10) ist und besagtes freies Ende des Kerns im Innern besagter Schale eingreift.

3. Elektroventilklappe gemäß Anspruch 1 bis 2, in der besagte elastische Mittel (17) eine zylindrische Schraubenfeder aufliegend an einer ihrer Enden auf einer Stützfläche (18) des Gehäuses und an ihrem anderen Ende auf einem Ansatz (16) besagten Zwischenorgans (11) umfassen.

4. Elektroventilklappe gemäß Anspruch 1 bis 3, in der besagtes freies Ende (19) des mobilen Kerns und besagter zweiter Sitz (15) konisch sind.

5. Elektroventilklappe gemäß Anspruch 1 bis 4, in der die zweiten elastischen Mittel (21) angeordnet sind, um besagten mobilen Kern in Richtung besagten zweiten Sitzes (15) zu pressen.

6. Rückführkreislauf für Benzindämpfe aus Verbrennungsmotor, **gekennzeichnet durch** die Tatsache, daß er ein Elektroventil umfaßt, das mit einer Ventilklappe gemäß Anspruch 1 bis 5 ausgestattet ist.

## Claims

1. A solenoid valve flap for a solenoid valve having a first seat (10), and an electromagnet coil (3), said valve flap comprising the free end (19) of a moving core (5) inside the hub of said coil, and an intermediate member (11) suitable for coming into abutment against said first seat and itself being provided with a second seat (15) facing the first seat and of cross section smaller than the cross-section of the first seat, said free end of the moving core being suitable for coming into abutment against said second seat, said solenoid valve flap being **characterized by** the fact that it further comprises resilient means (17) for pressing said intermediate member away from said first seat at values for the suction in the solenoid valve that are lower than a predetermined value (P₀), said intermediate member (11) being pressed against said first seat (10) against the action of said resilient means (17) at values for the suction in the solenoid valve that are higher than said predetermined value.

2. A solenoid valve flap according to claim 1, in which said intermediate member (11) is dish-shaped, said second seat (15) being formed in the end-wall (12) of said dish, the outside face of said end-wall facing said first seat (10), and said free end of the core being engaged in said dish.

3. A solenoid valve flap according to claim 1 or claim 2, in which said resilient means (17) comprise a helical spring abutting via one of its ends against an abutment surface (18) of the housing, and via its other end against a shoulder (16) of said intermediate member (11).

4. A solenoid valve flap according to any one of claims 1 to 3, in which said free end (19) of the moving core and said second seat (15) are conical.

5. A solenoid valve flap according to any one of claims 1 to 4, in which second resilient means (21) are provided for pressing said moving core towards said second seat (15).

6. A recycling circuit for recycling gasoline vapors for an internal combustion engine, said recycling circuit being **characterized in that** it includes a solenoid valve having a valve flap according to any one of claims 1 to 5.
